(19) **Europäisches Patentamt / European Patent Office / Office européen des brevets**

(11) **EP 4 539 407 A1**

(12) **EUROPEAN PATENT APPLICATION**
published in accordance with Art. 153(4) EPC

(43) Date of publication:
**16.04.2025 Bulletin 2025/16**

(21) Application number: **23819167.0**

(22) Date of filing: **07.06.2023**

(51) International Patent Classification (IPC):
**H04L 27/00** *(2006.01)*

(52) Cooperative Patent Classification (CPC):
**H04B 7/22; H04L 27/00**

(86) International application number:
**PCT/CN2023/098887**

(87) International publication number:
**WO 2023/237002 (14.12.2023 Gazette 2023/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.06.2022 CN 202210641452**

(71) Applicant: **Vivo Mobile Communication Co., Ltd.
Dongguan, Guangdong 523863 (CN)**

(72) Inventors:
• **JIAN, Rongling**
  **Dongguan, Guangdong 523863 (CN)**
• **TAN, Junjie**
  **Dongguan, Guangdong 523863 (CN)**
• **WU, Kai**
  **Dongguan, Guangdong 523863 (CN)**
• **JIANG, Dajie**
  **Dongguan, Guangdong 523863 (CN)**

(74) Representative: **Michalski Hüttermann & Partner
Patentanwälte mbB
Kaistraße 16A
40221 Düsseldorf (DE)**

(54) **INFORMATION TRANSMISSION METHOD AND APPARATUS, AND FIRST DEVICE AND SECOND DEVICE**

(57) This application discloses an information transmission method and apparatus, a first device, and a second device, which belongs to the field of communication technologies. The information transmission method in embodiments of this application includes: sending, by a first device, frequency offset indication information to a second device, where the frequency offset indication information is used for controlling a frequency offset generated during modulation of a carrier signal, and the frequency offset is an offset relative to a central frequency of the carrier signal; and receiving, by the first device, data transmitted by the second device, where the data is transmitted through a backscatter signal sent by the second device to the first device, and the backscatter signal is a signal obtained after the second device modulates the carrier signal based on the frequency offset indication information.

A first device sends frequency offset indication information to a second device, where the frequency offset indication information is used for controlling a frequency offset generated during modulation of a carrier signal, and the frequency offset is an offset relative to a central frequency of the carrier signal — 601

The first device receives data transmitted by the second device, where the data is transmitted through a backscatter signal sent by the second device to the first device, and the backscatter signal is a signal obtained after the second device modulates the carrier signal based on the frequency offset indication information — 602

**FIG. 6**

Processed by Luminess, 75001 PARIS (FR)

**Description**

**CROSS-REFERENCE TO RELATED APPLICATIONS**

This application claims priority to Chinese Patent Application No. 202210641452.2, entitled "INFORMATION TRANSMISSION METHOD AND APPARATUS, FIRST DEVICE, AND SECOND DEVICE" and filed with the China National Intellectual Property Administration on June 8, 2022, which is incorporated herein by reference in its entirety.

**TECHNICAL FIELD**

This application relates to the field of communication technologies, and specifically, to an information transmission method and apparatus, a first device, and a second device.

**BACKGROUND**

In a backscatter (Backscatter, BSC) communication system, a commonly used modulation manner includes amplitude shift keying (Amplitude Shift Keying, ASK), phase shift keying (Phase Shift Keying, PSK), frequency shift keying (Frequency Shift Keying, FSK), or quadrature amplitude modulation (Quadrant Amplitude Modulation, QAM). The FSK has a strong adaptation capability for interference and noise, but spectrum utilization of the FSK is half that of the ASK/PSK. Regardless of the modulation manner, a frequency offset may be generated when modulation is implemented through impedance switching. Due to the existence of the frequency offset, a carrier signal is moved as a whole and becomes a double sideband signal. If magnitude of the frequency offset is not controlled, interference is easily caused to another communication system. In addition, when a plurality of backscatter communication devices perform backscatter transmission at different frequencies, if a frequency offset is excessively large, interference is also caused to an adjacent channel, and communication quality is reduced.

**SUMMARY**

Embodiments of this application provide an information transmission method and apparatus, a first device, and a second device. This can avoid interference caused by a frequency offset and ensure communication quality.

According to a first aspect, an embodiment of this application provides an information transmission method, including: sending, by a first device, frequency offset indication information to a second device, where the frequency offset indication information is used for controlling a frequency offset generated during modulation of a carrier signal, and the frequency offset is an offset relative to a central frequency of the carrier signal; and receiving, by the first device, data transmitted by the second device, where the data is transmitted through a backscatter signal sent by the second device to the first device, and the backscatter signal is a signal obtained after the second device modulates the carrier signal based on the frequency offset indication information.

According to a second aspect, an embodiment of this application provides an information transmission apparatus, including: a first sending module, configured to send frequency offset indication information to a second device, where the frequency offset indication information is used for controlling a frequency offset generated during modulation of a carrier signal, and the frequency offset is an offset relative to a central frequency of the carrier signal; and a first receiving module, configured to receive data transmitted by the second device, where the data is transmitted through a backscatter signal sent by the second device, and the backscatter signal is a signal obtained after the second device modulates the carrier signal based on the frequency offset indication information.

According to a third aspect, an embodiment of this application provides an information transmission method, including: receiving, by a second device, frequency offset indication information sent by a first device, where the frequency offset indication information is used for the second device to control a frequency offset generated during modulation of a carrier signal, and the frequency offset is an offset relative to a central frequency of the carrier signal; and transmitting, by the second device, data to the first device, where the data is transmitted through a backscatter signal sent by the second device to the first device, and the backscatter signal is a signal obtained after the second device modulates the carrier signal based on the frequency offset indication information.

According to a fourth aspect, an embodiment of this application provides an information transmission apparatus, including: a second receiving module, configured to receive frequency offset indication information sent by a first device, where the frequency offset indication information is used for controlling a frequency offset generated during modulation of a carrier signal, and the frequency offset is an offset relative to a central frequency of the carrier signal; and a second sending module, configured to transmit data to the first device, where the data is transmitted through a backscatter signal sent to the first device, and the backscatter signal is a signal obtained after the carrier signal is modulated based on the frequency offset indication information.

According to a fifth aspect, an embodiment of this application provides a first device, including a processor and a memory, where the memory stores a program or instructions runnable on the processor, and when the program or the instructions are executed by the processor, the steps of the method according to the first aspect are implemented.

According to a sixth aspect, an embodiment of this application provides a second device, including a processor and a memory, where the memory stores a program or instructions runnable on the processor, and when the program or the instructions are executed by the processor, the steps of the method according to the second aspect are implemented.

According to a seventh aspect, an embodiment of this application provides a communication system, including a first device and a second device, where the first device implements the steps of the method according to the first aspect, and the second device implements the steps of the method according to the second aspect.

According to an eighth aspect, an embodiment of this application provides a readable storage medium, where the readable storage medium stores a program or instructions, and when the program or the instructions are executed by a processor, the steps of the method according to the first aspect, or the steps of the method according to the second aspect are implemented.

According to a ninth aspect, an embodiment of this application provides a chip, where the chip includes a processor and a communication interface, the communication interface is coupled to the processor, and the processor is configured to run a program or instructions, to implement the steps of the method according to the first aspect or the steps of the method according to the second aspect.

According to a tenth aspect, an embodiment of this application provides a computer program product, where the computer program product is stored in a storage medium, and the computer program product is executed by at least one processor to implement the steps of the information transmission method according to the first aspect or the steps of the method according to the second aspect.

In the embodiments of this application, the first device sends the frequency offset indication information to the second device, the second device controls the frequency offset generated during modulation of the carrier signal based on the frequency offset indication information, to obtain the backscatter signal, and the second device transmits the data to the first device based on the backscatter signal, thereby effectively controlling the frequency offset generated when the second device modulates the carrier signal, effectively avoiding interference caused by the frequency offset, and ensuring communication quality.

## BRIEF DESCRIPTION OF THE DRAWINGS

FIG. 1 is a schematic architectural diagram of a monostatic backscatter communication system;
FIG. 2 is a schematic architectural diagram of a bistatic backscatter communication system;
FIG. 3-1 and FIG. 3-2 are schematic diagrams of interference scenarios caused by a frequency offset;
FIG. 4 is a schematic structural diagram of a Tag;
FIG. 5 is a schematic diagram of a modulation principle of 2FSK;
FIG. 6 is a schematic flowchart of an information transmission method according to an embodiment of this application;
FIG. 7 is a schematic flowchart of an information transmission method according to another embodiment of this application;
FIG. 8 is a schematic diagram of information exchange of a UHF RFID protocol in an inventory mode;
FIG. 9 is a schematic flowchart of a scenario in which an information transmission method is applied to a single BSC device according to an embodiment of this application;
FIG. 10 is a schematic flowchart of a scenario in which an information transmission method is applied to a plurality of BSC devices according to an embodiment of this application;
FIG. 11 is a schematic flowchart of a scenario in which an information transmission method is applied to a plurality of BSC devices according to an embodiment of this application;
FIG. 12 is a schematic flowchart of a scenario in which an information transmission method is applied to a plurality of BSC devices according to an embodiment of this application;
FIG. 13 is a schematic flowchart of an information transmission process assisted by a third device in an embodiment of this application;
FIG. 14-1, FIG. 14-2, and FIG. 14-3 schematically show channel allocation situations after a second device performs frequency offset control according to an information transmission method;
FIG. 15 is a schematic diagram of channel allocation after a frequency offset of a second device in an information transmission method according to an embodiment of this application;
FIG. 16 is a schematic structural diagram of an information transmission apparatus according to an embodiment of this application;
FIG. 17 is a schematic structural diagram of an information transmission apparatus according to another embodiment of this application;
FIG. 18 is a schematic structural diagram of a first device according to an embodiment of this application; and
FIG. 19 is a schematic structural diagram of a second device according to another embodiment of this application.

## DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application shall fall within the protection scope of this application.

In the specification and claims of this application, the terms "first", "second", and the like are used to distinguish between similar objects, but are not used to describe a specific sequence or order. It should be understood that the terms used in such a way are interchangeable in proper circumstances, so that the embodiments of this application can be implemented in other sequences than the sequences illustrated or described herein. In addition, the objects distinguished by "first" and "second" are generally of a same type, and a quantity of objects is not limited, for example, a first object may be one or more than one. In addition, "and/or" in this specification and the claims represents at least one of the connected objects, and a character "/" used herein generally indicates an "or" relationship between associated objects.

It is to be noted that the technologies described in the embodiments of this application are not limited to a long term evolution (Long Term Evolution, LTE)/LTE-advanced (LTE-Advanced, LTE-A) system, and may be further applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described can be applied to the systems and radio technologies mentioned above, and can also be applied to other systems and radio technologies. The following exemplarily describes a new radio (new radio, NR) system, and NR terms are used in most of the descriptions below. However, these technologies can also be applied to applications other than NR system applications, for example, a 6th generation (6th Generation, 6G) communication system.

For ease of understanding of the embodiments of this application, the following describes terms involved in the embodiments of this application.

(1) Backscatter (Backscatter, BSC) communication

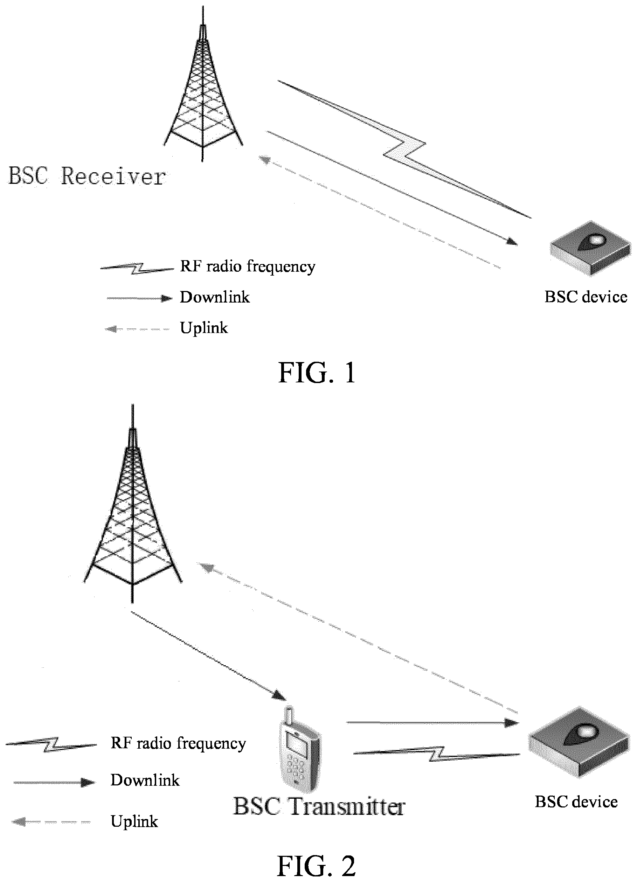

FIG. 1 and FIG. 2 show two common architectures in a backscatter communication system. FIG. 1 shows a monostatic backscatter communication system architecture, and FIG. 2 shows a bistatic backscatter communication system architecture. In FIG. 1 and FIG. 2, a BSC device is a device, namely, a second device in this application, that modulates information on a carrier signal sent by another device for transmission. In the monostatic backscatter communication system architecture, both a downlink signal transmit end and an uplink signal receive end belong to a same device, and a BSC receiving device (BSC Receiver) is used to represent the device in the figure. In the bistatic backscatter communication system architecture, a downlink signal transmit end and an uplink signal receive end belong to different devices, and a BSC Receiver and a BSC transmitting device (BSC Transmitter) are used to represent the two different devices in the figure.

In the monostatic backscatter communication system architecture, the BSC Receiver is a radio frequency source, and is also a downlink data transmit end of the BSC device and an uplink data receive end of the BSC device. The BSC Receiver directly communicates with the BSC device, and this deployed architecture has a high requirement on receiving sensitivity of a base station and the BSC device, but deployment of the architecture is simple.

In the bistatic backscatter communication system architecture, the BSC Transmitter is a radio frequency source, and is also a downlink data transmit end of the BSC device, but an uplink data receive end of the BSC device is the BSC Receiver. In the bistatic backscatter communication system architecture, there may be one or more BSC Transmitters. There are a plurality of variations of the architecture, and only one of the cases is described herein.

Due to a limited hardware capability of the BSC device, an impedance switch needs to be switched, to implement different modulation manners, so that a frequency offset is generated. Due to the existence of the frequency offset, a carrier signal is moved as a whole and becomes a double sideband signal. If magnitude of the frequency offset is not controlled, interference is easily caused to another communication system. In addition, when a plurality of BSC devices perform backscatter transmission at different frequencies, if the frequency offset is excessively large, interference is also caused to an adjacent channel, and communication quality is reduced.

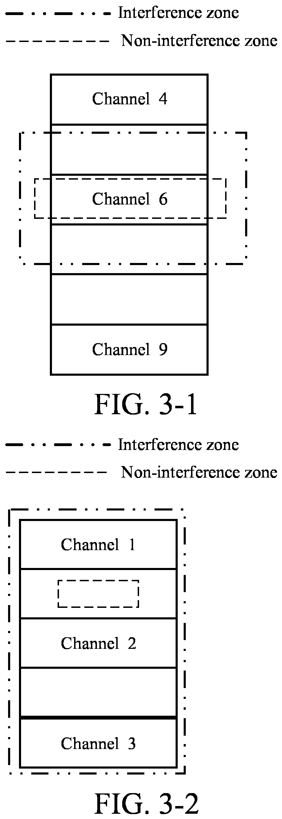

In a specific example, as shown in FIG. 3-1, an interference zone (Interference zone) and a non-interference zone (Non-Interference zone) are marked in FIG. 3-1. In a Wi-Fi operating mode, the BSC device operates in a channel 6 (Channel 6), and causes interference to an upper adjacent channel and a lower adjacent channel due to a frequency offset of a carrier signal caused by FSK modulation (or a frequency offset caused by impedance switching required in another modulation manner such as ASK/PSK). As shown in FIG. 3-2, an interference zone and a non-interference zone are marked in FIG. 3-2. In a Bluetooth (Bluetooth) operating mode, a channel 1 (Channel 1), a channel 2 (Channel 2), and a channel 3 (Channel 3) are broadcast channels, and are used for sending identification information (Identity Document, ID) and instruction information of the BSC device. A channel between the broadcast channels is a service channel, and is used for data modulation of the BSC device. If the BSC device transmits data on a service channel between the channel 1 and the channel 2, interference may be caused to another broadcast channel or service channel due to a frequency offset caused by impedance switching.

(2) Tag (Tag)

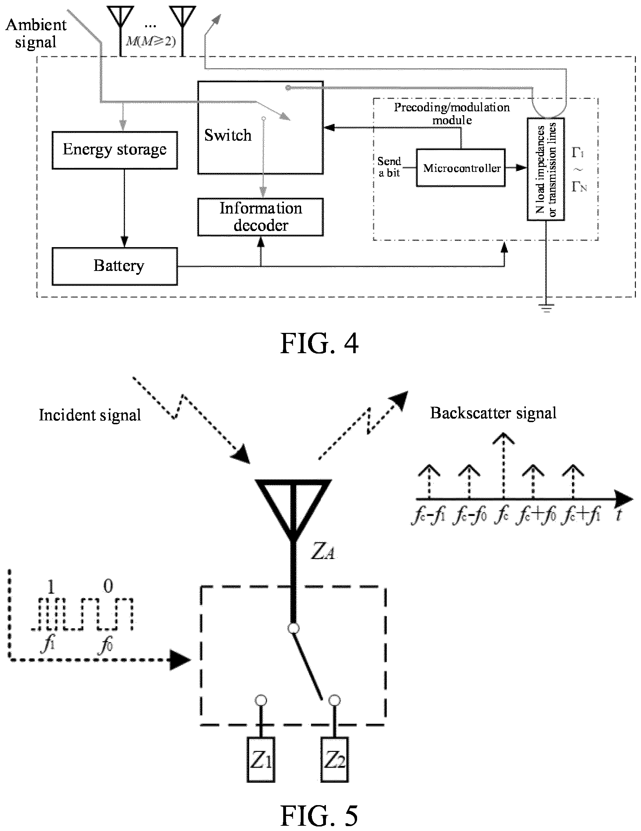

As one of forms of a BSC device, a Tag has a structure shown in FIG. 4. The Tag collects energy of a radio frequency signal in an environment, for example, collects energy of a cellular signal, a TV broadcast signal, and a Wi-Fi signal, and loads to-be-sent information onto the collected signals and sends the information to a BSC Receiver (for example, a base station), to implement communication between a passive BSC device and the BSC Receiver. As a passive component in a backscatter communication system, the Tag mainly includes several important parts: a radio frequency energy collector, a switch, a modulation module, and an information decoder. The BSC device receives a radio frequency source signal in the environment and obtains energy from the radio frequency source signal, and stores the energy in an energy collector, to provide energy for hardware modules for signal processing, signal transmitting, and the like of the BSC device. Subsequently, the received signal is modulated, transmitted by using a transmit antenna, and transmitted to the BSC Receiver.

Specifically, to send information stored in a memory to the BSC Receiver, the Tag changes an amplitude of a backscatter signal and a phase of the backscatter signal by controlling and switching a load impedance or using a transmission line, to modulate a received carrier signal in the environment. Finally, the BSC Receiver may receive and decode the backscatter signal, to obtain data transmitted by the Tag.

It is defined that a reflection coefficient is $\Gamma$, an impedance of each antenna of the BSC device is $Z_A$, and the i$^{th}$ load impedance is $Z_i$, and it can be obtained that:

$$Z_A = |Z_A|e^{j\theta_A} \qquad (1)$$

$$Z_i = |Z_i|e^{j\theta_i} \qquad (2)$$

$\theta_A$ represents a phase of the antenna, and $\theta_i$ represents a phase of the i$^{th}$ load impedance. It is assumed that the BSC device has a total of M antennas (M≥2) and N load impedances, where antenna impedances of the antennas are equal. In this case, a reflection coefficient $\Gamma_i$ corresponding to the i$^{th}$ load impedance $Z_i$ is defined as follows:

$$\Gamma_i = \frac{Z_i - Z_A}{Z_i + Z_A} = 1 - \frac{2|Z_A|}{|Z_A| + |Z_i|e^{-j(\theta_A - \theta_i)}} = |\Gamma_i|e^{j\theta_i} \qquad (3)$$

$$|\Gamma_i| = \frac{|Z_i|^2 + |Z_A|^2 - 2|Z_A||Z_i|\cos(\theta_A - \theta_i)}{|Z_i|^2 + |Z_A|^2 + 2|Z_A||Z_i|\cos(\theta_A - \theta_i)} \qquad (4)$$

$$\theta_i = arctan(\frac{2|Z_A||Z_i|\sin(\theta_A - \theta_i)}{|Z_A|^2 - |Z_i|^2}) \qquad (5)$$

It can be seen from Equation (4) and Equation (5) that an amplitude of the reflection coefficient and a phase of the reflection coefficient are closely related to selection of the load impedance. It can be further seen that an amplitude of the load impedance and a phase of the load impedance affect the amplitude and phase of the reflection coefficient.

Loss of the transmission line affects a spacing between constellation points. The loss is greater, so that the constellation points converge more toward a center in a constellation diagram, and a bit error rate is greater. In addition, a length of the transmission line affects a phase of the signal. Therefore, in addition to changing the phase of the reflection coefficient by switching the load impedance, the phase of the reflection coefficient may also be changed by using the transmission line.

(3) FSK modulation principle of a BSC device

The BSC device may implement FSK modulation by controlling a switching frequency of a switch. The switching frequency of the switch is controlled by a square wave signal generated by a microcontroller unit (Microcontroller Unit, MCU) or a hardware device such as an oscillator, or a modulation frequency may be controlled by a device similar to a varicap diode. A modulation principle diagram of Binary Frequency Shift Keying (2FSK) is shown in FIG. 5.

The 2FSK may be implemented by using a single load impedance, or may be implemented by using two load impedances. If impedance values of the two load impedances are located at an open-circuit point and a short-circuit point of a Smith chart, in other words, the impedance values of the two load impedances are infinity and 0, an absolute value of a reflection coefficient can always be 1, ensuring that a reflected power of a tag signal is maximized. It is assumed that an impedance value of $Z_1$ is infinity, an impedance value of $Z_2$ is 0, and $\Delta f$ represents a frequency difference, the reflection coefficient may be expressed as:

$$\Gamma(t) = \begin{cases} 1, & Z_1 = \infty, t \in \frac{n}{\Delta f}, \frac{2n+1}{2\Delta f}\Big), n \text{ is an integer} \\ -1, & Z_2 = 0, t \in \frac{2n+1}{2\Delta f}, \frac{n+1}{\Delta f}\Big), n \text{ is an integer} \end{cases} \qquad (6)$$

It is assumed that an incident signal is $S_{in} = Re(e^{j2\pi f_c t})$. After 2FSK modulation, a backscatter signal $S_{bs}$ may be represented as:

$$S_{bs} = \Gamma S_{in} \qquad (7)$$

Because a square wave function is a periodic function, the square wave function may be represented by a Fourier series. A first harmonic component of the square wave function is taken, and Equation (7) may be converted into:

$$S'_{bs} = \frac{4}{\pi} sin(2\pi f_c t) sin(2\pi \Delta f t) = \frac{2}{\pi} \{cos[2\pi(f_c - \Delta f)t] - sin[2\pi(f_c + \Delta f)t]\} \qquad (8)$$

It can be seen from Equation (8) that the backscatter signal becomes a double sideband signal, and a frequency offset is $\Delta f$. In addition, if a radio frequency source is a LoRa signal, chirp spread spectrum (Chirp Spread Spectrum, CSS) modulation may be implemented through a linear variation of the switching frequency of the switch. The linear variation of the switching frequency of the switch may be controlled by the MCU, or may be implemented by using a voltage-controlled oscillator controlled by a digital-to-analog converter (Digital-to-Analog Converter, DAC). From a perspective of modulation, CSS is an extension of the FSK modulation.

The carrier signal in the foregoing principle may be a single-frequency signal or a wideband signal. In other words, the foregoing principle is applicable to both a single-frequency carrier signal and a wideband carrier signal.

Due to a limited hardware capability of the BSC device, an impedance switch needs to be switched, to implement different modulation manners, so that a frequency offset is generated. Due to the existence of the frequency offset, a carrier signal is moved as a whole and becomes a double sideband signal. If magnitude of the frequency offset is not controlled, interference is easily caused to another communication system. In addition, when a plurality of BSC devices perform backscatter transmission at different frequencies, if the frequency offset is excessively large, interference is also caused to an adjacent channel, and communication quality is reduced. To resolve the technical problem, the embodiments of this application provide an information transmission method. In the method, a first device sends frequency offset indication information to a second device, the second device controls, based on the frequency offset indication information, a frequency offset generated during modulation of a carrier signal, to obtain a backscatter signal, and the second device transmits data to the first device based on the backscatter signal, thereby effectively controlling a frequency modulation range of the second device, reducing interference, and ensuring communication quality.

The information transmission method according to the embodiments of this application is described in detail below with reference to the accompanying drawings through some embodiments and application scenarios thereof.

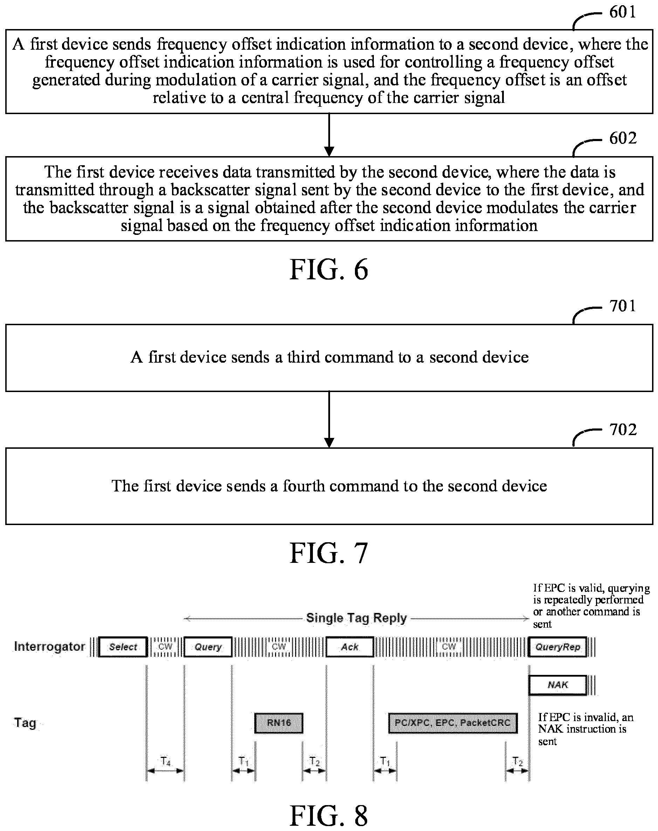

FIG. 6 is a schematic flowchart of an information transmission method according to an embodiment of this application. As shown in FIG. 6, the method includes the following steps.

Step 601: A first device sends frequency offset indication information to a second device, where the frequency offset indication information is used for the second device to control a frequency offset generated during modulation of a carrier signal, and the frequency offset is an offset relative to a central frequency of the carrier signal.

Step 602: The first device receives data transmitted by the second device, where the data is transmitted through a backscatter signal sent by the second device to the first device, and the backscatter signal is a signal obtained after the second device modulates the carrier signal based on the frequency offset indication information.

The first device may include but is not limited to a base station, a WLAN access point, or a Wi-Fi node. The base station may be referred to as a NodeB, an evolved NodeB (eNB), an access point, a base transceiver station (Base Transceiver Station, BTS), a radio base station, a radio transceiver, a basic service set (Basic Service Set, BBS), an extended service set (Extended Service Set, ESS), a home B node, a home evolved B node, a transmitting receiving point (Transmitting Receiving Point, TRP), or any proper term in the field, provided that a same technical effect can be reached. The base station is not limited to a specific technical word. It is to be noted that, a base station in an NR system is only used as an example in the embodiments of this application introduce a, but a specific type of the base station is not limited. The first device may alternatively be a device such as a mobile phone, a tablet personal computer (Tablet Personal Computer), a laptop computer (Laptop Computer) also referred to as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a personal computer (Personal Computer, PC), or a wearable device (Wearable Device). The second device may include but is not limited to a Tag.

The frequency offset indication information is used for the second device to control the frequency offset generated during modulation of the carrier signal, and the frequency offset is the offset relative to the central frequency of the carrier signal. The carrier signal may be a single-frequency signal or a wideband signal. This is not limited in this application. In a case that the carrier signal may include that the carrier signal is the wideband signal, the carrier signal in this embodiment of this application includes a plurality of subcarrier signals. In other words, the frequency offset indication information is used for the second device to control the frequency offset generated during modulation of the carrier signal or the subcarrier signal, and the frequency offset is the offset relative to the central frequency of the carrier signal or the subcarrier signal. The carrier signal may be a specific stable radio frequency signal in an environment, or may be provided by the first device. In a case that the second device is an active device, the carrier signal may alternatively be provided by the second device. In a case that the first device provides the carrier signal, the first device may carry the frequency offset indication information on the carrier signal, and send the carrier signal to the second device while sending the frequency offset indication information to the second device. The first device may alternatively not carry the frequency offset indication information on the carrier signal, but send the frequency offset indication information and the carrier signal to the second device in sequence. In a case that the first device sends the frequency offset indication information and the carrier signal to the second device in sequence, the first device sends the frequency offset indication information to the second device before sending the carrier signal to the second device.

In an optional embodiment, the first device may generate the frequency offset indication information, or may receive the frequency offset indication information sent by another device (for example, a base or a mobile phone terminal).

In a case that the first device generates the frequency offset indication information, referring to FIG. 1 and FIG. 2, the first device may be a BSC Receiver. In a case that the first device receives the frequency offset indication information sent by the another device, referring to FIG. 2, the first device may be a BSC Transmitter, and a quantity of first devices may be one or more.

In an optional embodiment, the first device may directly send the frequency offset indication information to the second device, or may send the frequency offset indication information to the second device through a third device. The first device may directly receive the data sent by the second device, or may receive, through the third device, the data sent by the second device. A quantity of third devices may be one or more. This is not limited in this application. In a case that the first device sends the frequency offset indication information to the second device through the third device, referring to FIG. 2, the first device may be the BSC Receiver, and the third device may be the BSC Transmitter.

In a specific example, the frequency offset indication information includes at least one of the following:

a first indication, where the first indication is used for indicating a maximum frequency offset of the second device;
a second indication, where the second indication is used for indicating a maximum modulation frequency of the second device; and
a third indication, where the third indication is used for indicating an available frequency resource of the second device.

The available frequency resource indicated by the third indication may be obtained based on the maximum frequency offset indicated by the first indication and/or the maximum modulation frequency indicated by the second indication. Therefore, in an optional embodiment, if the frequency offset indication information includes the first indication and/or the second indication, the third indication may be determined based on the first indication and/or the second indication. If the first device indicates the available frequency resource, the second device may modulate the backscatter signal onto the indicated available frequency resource by changing a modulation frequency of an excitation signal based on the indicated frequency resource.

In an optional embodiment, the frequency offset indication information further includes a fourth indication or a fifth indication, where the fourth indication is used for indicating that the second device implements frequency shifting based on at least one of the first indication, the second indication, and the third indication, and the fifth indication is used for indicating that the second device implements frequency hopping by using the third indication and at least one of the first indication and the second indication. The frequency hopping means that a same second device transmits data at different moments by using backscatter signals modulated by different subcarriers.

In an optional embodiment, the first device may determine a value of the frequency offset indication information based on at least one of the following:

the central frequency of the carrier signal and a signal bandwidth of the carrier signal;
a signal receiving bandwidth of the second device (the signal receiving bandwidth may alternatively be referred to as a radio frequency bandwidth, a system bandwidth, an impedance bandwidth, or an axial ratio bandwidth);
a frequency modulation capability of hardware of the second device; and
a quantity of impedances of the second device.

The frequency modulation capability of the hardware of the second device includes at least one of the following: a switching frequency of a switch of the second device and a frequency modulation capability of a varicap diode of the second device. The switching frequency of the switch of the second device may also be represented by duration of a first level of the second device.

It is assumed that the central frequency of the carrier signal in the foregoing transmission process is f0, upper and lower sideband frequencies are f01 and f02 respectively, and the signal bandwidth is BW0 (|f02-f01|=BW0). The impedance bandwidth (the signal receiving bandwidth/radio frequency bandwidth/system bandwidth) of the second device is BW1 (|f12-f11|=BW1), upper and lower sideband frequencies are f11 and f12 respectively, and the central frequency is f1. If the maximum frequency offset indicated by the first device is $\Delta f$, and another harmonic component other than a first harmonic is ignored (it is assumed that energy of the another harmonic component is low), the indicated frequency offset needs to satisfy that f1+$\Delta f$<f12, and f1-$\Delta f$>f11, to avoid causing interference to another frequency band. Similarly, if the first device indicates the maximum modulation frequency, this corresponds to f11 and f12 in the foregoing example.

In an optional embodiment, the signal receiving bandwidth, the frequency modulation capability of the hardware, and the quantity of impedances of the second device may be actively reported by the second device to the first device, or may be requested by the first device from the second device. Therefore, the information transmission method may further include:

the first device sends a second command to the second device; and
the first device receives first response information fed back by the second device for the second command, where the first response information includes at least one of the following: the signal receiving bandwidth of the second device, the frequency modulation capability of the hardware of the second device, and the quantity of impedances of the second device;
**or**
the first device receives a seventh indication reported by the second device, where the seventh indication includes at least one of the following: the signal receiving bandwidth of the second device, the frequency modulation capability of the hardware of the second device, and the quantity of impedances of the second device.

In an optional embodiment, the seventh indication may further include a storage capacity of the second device and/or a data amount that the second device needs to report.

In an optional embodiment, the frequency offset indication information may include first frequency offset indication information and second frequency offset indication information, where the first frequency offset indication information is used for the second device to implement a frequency offset for allocation of a first channel, and the second frequency offset indication information is used for the second device to implement a frequency offset of a second channel. For example, in a Bluetooth mode, the first channel may be a broadcast channel, the second channel may be a service channel, the first frequency offset indication information is used for the second device to implement a frequency offset for allocation of the broadcast channel, and the second frequency offset indication information is used for the second device to implement a frequency offset of the service channel.

In a case that the frequency offset indication information includes the first frequency offset indication information and the second frequency offset indication information, that a first device sends frequency offset indication information to a second device includes:

the first device sends the first frequency offset indication information and the second frequency offset indication information to the second device simultaneously;

or

the first device sends the first frequency offset indication information and the second frequency offset indication information to the second device at different moments.

In other words, in a case that the frequency offset indication information includes the first frequency offset indication information and the second frequency offset indication information, the first device may simultaneously send the first frequency offset indication information and the second frequency offset indication information to the second device, or may send the first frequency offset indication information and the second frequency offset indication information in sequence.

When the first device sends the first frequency offset indication information and the second frequency offset indication information in sequence, the first device may first send the first frequency offset indication information to the second device, and the second device implements, based on the first frequency offset indication information, the frequency offset for allocation of the first channel. Then, the first device sends the second frequency offset indication information to the second device after the second device completes allocation of the first channel. The first device may alternatively first send the first frequency offset indication information to the second device, and then send the second frequency offset indication information to the second device. In other words, the first device sends the second frequency offset indication information to the second device before the second device completes allocation of the first channel.

In an optional embodiment, the first device may actively send the frequency offset indication information to the second device. In other words, the first device initiates a process of transmitting the frequency offset indication information.

In another optional embodiment, the first device may send the frequency offset indication information to the second device in response to a sixth indication reported by the second device, where the sixth indication is used for indicating that the second device has a frequency offset control requirement. For example, in a case that a bit error rate is high (for example, the bit error rate is greater than a preset threshold), the second device sends the sixth indication to the first device, to indicate to the first device that the second device needs the frequency offset indication information to control magnitude of the frequency offset. The first device sends the frequency offset indication information to the second device after receiving the sixth indication.

In an optional embodiment, the second device may simultaneously report the sixth indication and the seventh indication to the first device, or may report the sixth indication and the seventh indication to the first device in sequence. This is not limited in this application.

In an optional embodiment, the first device may directly send the frequency offset indication information to the second device, or may carry the frequency offset indication information on an existing first command, and send the frequency offset indication information to the second device while sending the first command to the second device. After receiving the first command, the second device controls, based on the frequency offset indication information in the first command, the frequency offset during modulation of the carrier signal, to obtain the backscatter signal.

In an optional embodiment, the first command may be further used for indicating second device to transmit data to the first device. For example, the first command may include a ninth indication, and the ninth indication is used for indicating the second device to transmit data to the first device. After receiving the first command, the second device controls, based on the frequency offset indication information in the first command, the frequency offset during modulation of the carrier signal, to obtain the backscatter signal. In addition, based on an indication for data transmission in the first command, the second device transmits data to the first device by using the backscatter signal.

In an optional embodiment, the first device may send the foregoing second command to the second device before sending the first command to the second device, and receive the first response information fed back by the second device for the second command. Alternatively, after receiving the seventh indication reported by the second device, the first device sends the first command to the second device.

In an optional embodiment, the first device may send the frequency offset indication information or the indication used for indicating the second device to send data to the first device to the second device by using different commands. In other words, the first command may include a third command and a fourth command. The third command includes the frequency offset indication information, and the fourth command is used for indicating the second device to transmit data to the first device. As shown in FIG. 7, in step 701, the first device sends the third command to the second device, and in step 702, the first device sends the fourth command to the second device.

In an optional embodiment, the third command may further include the first response information and/or a modulation manner. The fourth command may further include the modulation manner. The second device may modulate the carrier signal in the modulation manner, to obtain the backscatter signal.

In the information transmission method according to this embodiment of this application, a quantity of second devices may be one or more. When the quantity of second devices is one, the first device may first send the third command to the second device, and then send the fourth command to the second device. In a case that the quantity of second devices is more, the first device may interact with all or some of the second devices based on a capability of the first device. A specific process is described below.

Embodiment 1

In a case that the quantity of second devices is M (M is an integer greater than or equal to 2), the first device simultaneously sends the second command to the M second devices; and

the first device receives the first response information fed back by the second device for the second command, where in a case that the first device simultaneously receives M pieces of first response information, the first device simultaneously sends the third command to the M second devices; or in a case that the first device simultaneously receives N pieces of first response information, only after M pieces of first response information are received, the first device simultaneously sends the third command to the M second devices, where $1 \leq N < M$; or in a case that the first device simultaneously receives N pieces of first response information, the first device directly sends the third command to N second devices that feed back the first response information; and
the first device sends the fourth command to the second device that receives the third command.

In this embodiment, the M second devices may simultaneously feed back the first response information to the first device, or may feed back the first response information to the first device at different moments. In a case that the M second devices simultaneously feed back the first response information to the first device, the first device simultaneously receives M pieces of first response information, the first device simultaneously sends the third command to the M second devices, and the first device sends the fourth command to the M second devices after sending the third command. In a case that the M second devices feed back the first response information to the first device at different moments, the first device receives N pieces of first response information of the second device at a same moment, the first device may wait for a period of time until the first device receives M pieces of first response information before simultaneously sending the third command to the M second devices, and the first device sends the fourth command to the M second devices after sending the third command. Alternatively, the first device may directly send the third command to the N second devices that feed back the first response information, and after sending the third command, the first device sends the fourth command to the N second devices that feed back the first response information.

Embodiment 2

In this embodiment, the first device sends an eighth indication to the second device before sending the frequency offset indication information to the second device, where the eighth indication is used for indicating a muting pattern and a muting ratio. Each second device in the M second devices is randomly mute in the muting pattern or feeds back second response information to the first device for the third command.
In other words, the first device simultaneously sends the third command to the M second devices;

the first device receives second response information fed back by K second devices for the third command, where $1 \leq K < M$, and (M-K) second devices are mute in the muting pattern; and
in a case of receiving the second response information fed back by the K second devices, the first device sends the fourth command to the K second devices that feed back the second response information.

In another optional embodiment, after sending the fourth command to the K second devices that feed back the second response information, the first device may repeatedly send the third command and the fourth command until the first device receives the second response information fed back by the M second devices.

Embodiment 3

In this embodiment, the first device also sends the eighth indication to the second device before sending the frequency offset indication information to the second device. Different from Embodiment 2, in this embodiment, the first device sends the fourth command to the M second devices in a case of receiving the second response information fed back by the M second devices. This embodiment includes:
The first device simultaneously sends the third command to the M second devices;

the first device receives second response information fed back by K second devices for the third command, where $1 \leq K < M$, and (M-K) second devices are mute in the muting pattern;
the first device sends a fifth command to the K second devices that feed back the second response information, where the fifth command is used for indicating that the second device feeding back the second response information does not need to respond to the third command;

the first device repeatedly sends the third command and the fifth command until the first device receives the second response information fed back by the M second devices; and

the first device sends the fourth command to the M second devices.

In a process in which the first device repeatedly sends the third command and the fifth command, after sending the third command and receiving the second response information fed back by the second device, the first device may count a quantity of second devices feeding back the second response information, to determine whether the quantity of second devices feeding back the second response information is M. If the quantity of second devices feeding back the second response information is M, it is determined that a current cycle is the last cycle, and the first device may no longer send the fifth command.

To make the information transmission method in this embodiment of this application clearer, the following uses an example in which the first device is a reader (Reader) and the second device is a Tag for description.

First, an interaction command between the Reader and the Tag is described. Operation instructions of the Reader are shown in Table 1 below.

Table 1

| Operation type | Instructions | Function |
|---|---|---|
| Select (Select) | Select (Select) | Select a tag |
| Inventory (Inventory) | Query (Query) | Start an inventory action<br>Generate a random number to determine response time |
| | Query Adjust (Query Adjust) | Adjust a quantity of original slots of a tag |
| | QueryRep (QueryRep) | A number of slots of a tag is reduced |
| | EPC answer (ACK) | The reader responds to an instruction to a tag |
| | NAK | An instruction tag sent by the reader returns to an arbitrate (Arbitrate) state |
| Access (Access) | Random request (Req_RN) | Require a tag to generate a random number |
| | Read (Read) | Read data from a location in storage of a tag |
| | Write (Write) | Write data into storage of a tag |
| | Kill (Kill) | No response is made to any reader anymore<br>Prevent leakage of privacy<br>A tag cannot be used anymore |
| | Lock (Lock) | A writing action can no longer be performed on a tag |
| | | Prevent data from being arbitrarily changed |
| | Access (optional) | A tag is caused to change from an open (Open) state to a secure (Secure) state when the tag has a password |
| | BlockWrite (optional) | Write into a plurality of blocks at a time |
| | Lock Erase (optional) | Clear a plurality of blocks in storage of a single tag |

Operation instructions of the Tag are shown in Table 2 below.

Table 2

| State of a tag | Description |
|---|---|
| Ready (Ready) | Not in a currently performed inventory operation |
| Arbitrate (Arbitrate) | The tag currently belongs to a specific inventory operation<br>A number representing SlotSlot is not zero, and this indicates remaining a waiting state |
| Reply (Reply) | Generate a 16-bit random number for the reader |

(continued)

| State of a tag | Description |
|---|---|
|  | State of responding when an ACK message is received<br>Return to an arbitrate state when no ACK message is received |
| Acknowledge (Acknowledge) | Enter any state other than a killed state from this state |
| Open (Open) | When a tag whose password is not zero in an acknowledgement state receives an instruction of a random request |
| Secure (Secure) | When a tag with a password of zero in an acknowledgement state receives an instruction of a random request sent by the reader |
| Killed (Killed) | Permanently unavailable |

As shown in FIG. 8, a protocol of an ultra high frequency radio frequency identification (Ultra High Frequency Radio Frequency Identification, UHF RFID) technology designs, in inventory mode, to require that after the reader sends a query (Query) instruction, the Tag responds and replies (Reply), to be specific, generates a 16-bit random number to the reader. Then, after the reader sends a sequence to the Tag through an ACK instruction, the Tag sends relevant data to the reader.

As shown in FIG. 8, if an EPC reply is invalid, an NAK instruction is sent (NAK if EPC is invalid). If the EPC is valid, querying is repeatedly performed or another command is sent (QueryRep or other command if EPC is valid).

A competing communication process of the backscatter communication system is that in an existing backscatter communication system, the Reader generally can receive a backscatter signal of only one Tag at a same moment. For example, in an inventory process of RFID, when the Reader sends a control command to start the inventory process, a value Q is indicated. The Tag randomly selects a value q in locally generated values of {0, ..., 2^Q-1}. A Tag whose current random value is 0 transmits the backscatter signal in response to the control command of the Reader. A Tag whose current random value is not 0 temporarily does not transmit the backscatter signal. After completing communication with the Tag whose random value is 0, the Reader may continue to send the control command (for example, QueryRep), for example, instructing the Tag to subtract 1 from the generated random number, and the Tag whose random value is reduced to 0 performs backscatter transmission in response to the control command.

A collision management communication process of the backscatter communication system is that the International organization for standardization-International electrotechnical commission (International Organization for Standardization-International Electrotechnical Commission, ISO-IEC) 18000-3 stipulates a processing method for a conflict in inventorying a plurality of Tags. Specifically, in an RFID system for multi-Tag inventory, a collision conflict between a plurality of tags is managed in a manner combining frequency division multiple access and time division multiple access. Each Tag randomly selects a channel for responding to an instruction (Command) sent by the Reader, and mainly responds to the instruction sent by the Reader by using a frequency hopping method for random channel selection.

The protocol mainly specifies the following several response manners for channel selection.

(1) Fixed channel response mode: If the Reader selects this mode, the Tag responds only on a selected channel. This mode is mainly applicable to a single-Tag communication system.
(2) Random channel response mode:

Non-muting mode: The Tag responds on a channel randomly selected by the Tag, and this mode is applicable to a communication system with a medium quantity of Tags.

Random muting mode: The Tag randomly determines whether to respond on a corresponding channel, where a muting ratio is generally indicated by the Reader, and this mode is applicable to a communication system with a large quantity of Tags.

Full muting mode: In a system with a large quantity of Tags, to improve an authentication ratio of the Tag and ensure that a plurality of Tags successfully access a network, the Reader indicates the full muting mode, and the Tag is not to reply to a Command.

It is assumed that eight Tags in the network need to access the network, the muting ratio is set to 1, and every one to three Tags reply to the command of the Reader. A transmission process is as follows:

(1) The eight Tags are located in a coverage area of the Reader.

(2) The Reader sends an instruction "zero length read" to the Tag.

(3) An identified Tag remains temporarily mute.

(4) The Reader repeatedly sends the instruction "zero length read" until the eight Tags are all identified.

(5) After the identification process, a specific command (specific read command) is used to confirm the identified Tag.

(6) Splice all commands to enable the Reader to simultaneously read data of the eight Tags.

Table 3 below shows an identification process of eight Tags.

Table 3

| Reader | Result | Quantity of identified Tags |
|---|---|---|
| Start | | |
| The Reader sends an instruction "a zero length read command" | The eight Tags reply on a randomly selected channel | 0 |
| The Reader receives responses from three Tags | | 3 |
| The Reader sends a "specific read command" to three identified Tags | A tag remaining mute does not make a response | |
| The Reader sends the instruction "a zero length read command" | Five Tags reply on the randomly selected channel | 3 |
| The Reader receives responses from three Tags | | 6 |
| The Reader sends the "specific read command" to three identified Tags | A tag remaining mute does not make a response | |
| The Reader sends the instruction "a zero length read command" | Two remaining non-mute Tags reply on the randomly selected channel | |
| The Reader receives responses from two Tags | | 8 |
| End | Time consumption is 5772 ms | The eight Tags are identified |

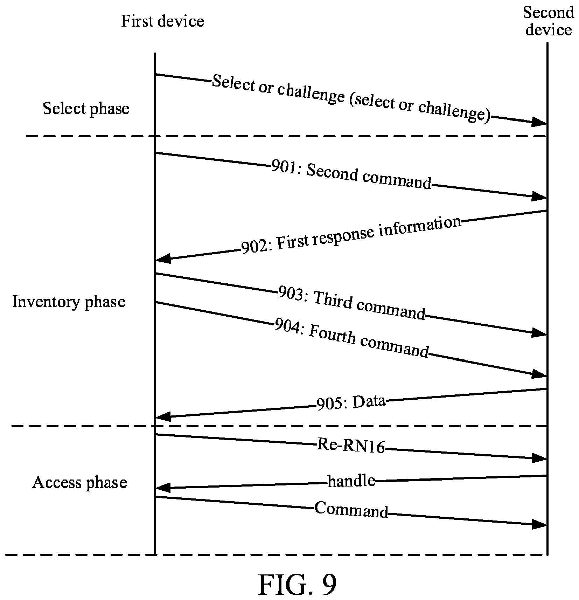

With reference to the foregoing content, according to the information transmission method in this embodiment of this application, a process in which the Reader performs information transmission with one Tag is shown in FIG. 9. Steps shown in FIG. 9 include a select phase (Select phase); an inventory phase (Inventory phase), where the inventory phase corresponds to steps 901 to 905; and an access phase (Access phase). The steps shown in FIG. 9 includes:

Step 901: The Reader initiates a second command (Query/QueryRep/QueryAdjust). The Reader may simultaneously send a carrier signal (Carrier Wave, CW) to the Tag.

Step 902: The Tag feeds back first response information RN16 to the Reader, where the RN16 includes but is not limited to: a signal receiving bandwidth of the Tag, a frequency modulation capability of hardware of the second device (for example, a switching frequency of a switch of the second device, or a frequency modulation capability of a varicap diode of the second device), a quantity of impedances, and another hardware implementation capability.

Step 903: After correctly receiving the RN16 fed back by the Tag, the Reader sends a third command and acknowledgment information (Acknowledgement, ACK) to the Tag, or otherwise sends negative acknowledgement information (Negative Acknowledgement, NACK) to the Tag. The ACK includes, but is not limited to, RN16 information, a zero length read command (zero length read command), and frequency offset indication information.

Step 904: The Reader sends a fourth command to the Tag. The Reader may simultaneously send the carrier signal CW to the Tag. The fourth command may include but is not limited to a modulation manner. The modulation manner may alternatively be carried in the ACK, and the frequency offset indication information carried in the ACK may alternatively be carried by the fourth command in this step.

Step 905: The Tag transmits data to the Reader.

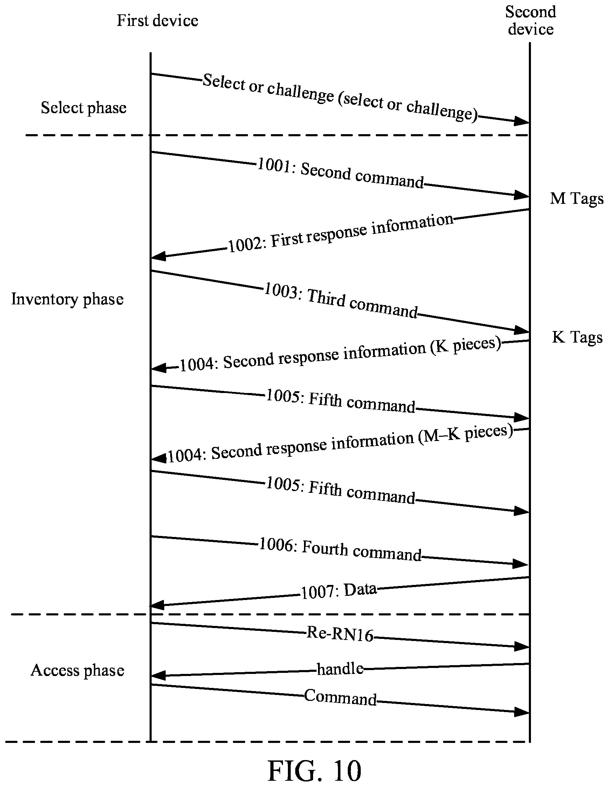

A process in which the Reader performs information transmission with a plurality of Tags is shown in FIG. 10 to FIG. 12. As shown in FIG. 10, the process in which the Reader performs information transmission with a plurality of Tags includes the following steps.

Step 1001: The Reader simultaneously initiates a second command (Query/QueryRep/QueryAdjust) to M Tags. Alternatively, the Reader may simultaneously send a carrier signal CW to the M Tags.

Step 1002: Through adjustment of a Q value, the M Tags randomly select different channels and feed back first response information RN16 to the Reader, where the RN16 includes but is not limited to: a signal receiving bandwidth of the Tag, a frequency modulation capability of hardware of the second device (for example, a switching frequency of a switch of the second device, or a frequency modulation capability of a varicap diode of the second device), a quantity of impedances, and another hardware implementation capability.

Step 1003: After correctly receiving the RN16 fed back by the Tag, the Reader simultaneously sends a third command and ACK to the M Tags, or otherwise sends NACK. The ACK includes, but is not limited to, RN16 information, a zero length read command, and frequency offset indication information.

Step 1004: The Tag remains mute in the randomly selected channel or makes a response to the Reader, where K (K≤M) Tags make a response to the Reader and send second response information to the Reader, and remaining (M-K) Tags remain mute, where K may be equal to M, and this depends on a channel allocation capability of the first device.

Step 1005: The Reader sends a fifth command "a specific read command" to the Tags that make a response, where the fifth command is used for indicating that the second device feeding back the second response information does not need to respond to the second command.

Steps 1003 to 1005 are repeated until the Reader receives second response information fed back by M Tags.

Step 1006: The Reader sends a fourth command to the M Tags. Alternatively, the Reader may simultaneously send a carrier signal CW to the M Tags. The fourth command includes but is not limited to a modulation manner. The modulation manner may alternatively be carried in the ACK, and the frequency offset indication information carried in the ACK may alternatively be carried by the fourth command in this step.

Step 1007: The M Tags transmit data to the Reader.

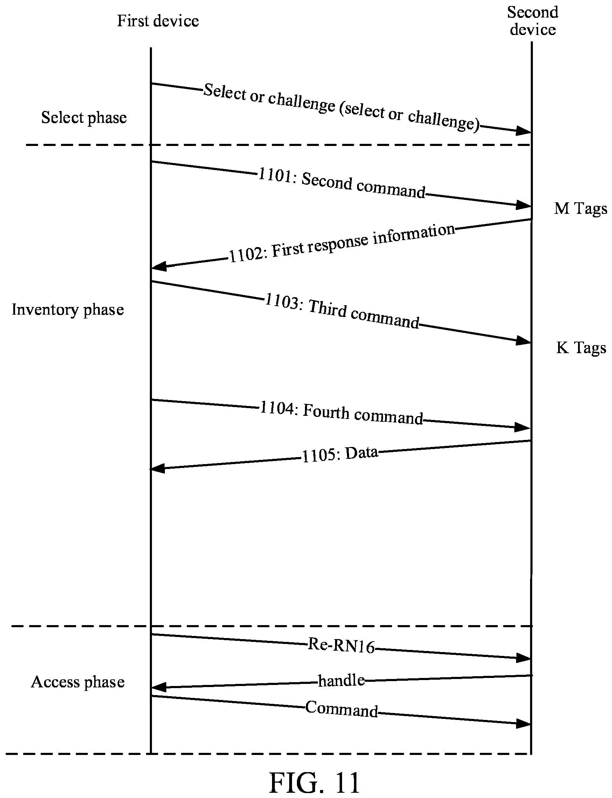

As shown in FIG. 11, the process in which the Reader performs information transmission with a plurality of Tags includes the following steps.

Step 1101: The Reader simultaneously initiates a second command (Query/QueryRep/QueryAdjust) to M Tags. Alternatively, the Reader may simultaneously send a carrier signal CW to the M Tags.

Step 1102: Through adjustment of a Q value, the M Tags randomly select different channels and feed back first response information RN16 to the Reader, where the RN16 includes but is not limited to: a signal receiving bandwidth of the Tag, a frequency modulation capability of hardware of the second device (for example, a switching frequency of a switch of the second device, or a frequency modulation capability of a varicap diode of the second device), a quantity of impedances, and another hardware implementation capability.

Step 1103: After correctly receiving RN16 fed back by K Tags, the Reader simultaneously sends a third command and ACK to the K Tags, or otherwise sends NACK. The ACK includes, but is not limited to, RN16 information, a zero length read command, and frequency offset indication information.

Step 1104: The Reader sends a fourth command to the K Tags. Alternatively, the Reader may simultaneously send a carrier signal CW to the K Tags. The fourth command includes a modulation manner. The modulation manner may alternatively be carried in the ACK, and the frequency offset indication information carried in the ACK may alternatively be carried by the fourth command in this step.

Step 1105: The K Tags transmit data to the Reader.

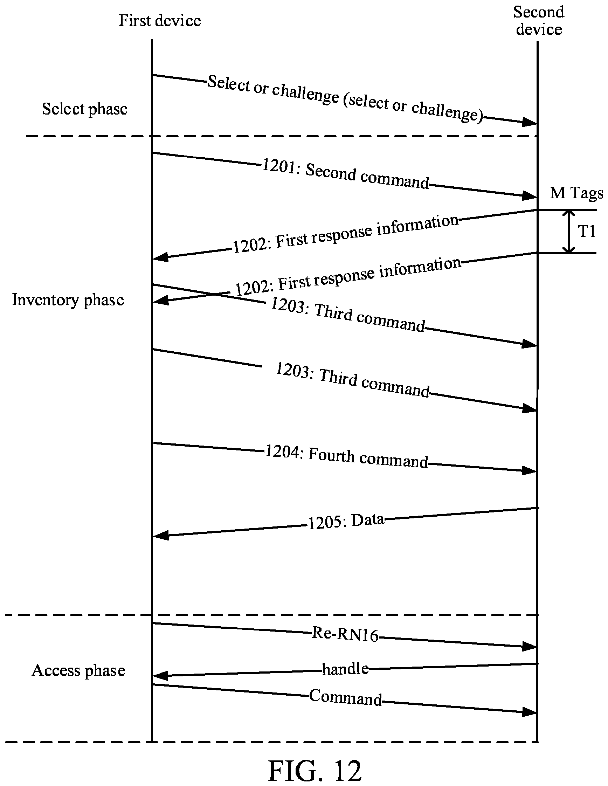

As shown in FIG. 12, the process in which the Reader performs information transmission with a plurality of Tags includes the following steps.

Step 1201: The Reader simultaneously initiates a second command (Query/QueryRep/QueryAdjust) to M Tags. Alternatively, the Reader may simultaneously send a carrier signal CW to the M Tags.

Steps 1202: The Reader receives first response information RN16 fed back by the Tag for the second command.

In a case that the Reader simultaneously receives M pieces of first response information, in other words, in a case that T1=0 in FIG. 12, M pieces of RN16 are spliced, and the Reader simultaneously sends a third command and ACK to the M Tags.

Alternatively, in a case that the first device simultaneously receives N pieces of first response information, in other words, in a case that T1#0 in FIG. 12, the first device simultaneously sends a third command to the M Tags after receiving the N pieces of first response information, where 1≤N<M.

Alternatively, in a case that the first device simultaneously receives N pieces of first response information, in other words, in a case that T1#0 in FIG. 12, the first device directly sends a third command to N Tags feeding back the first response information.

Step 1204: The Reader sends a fourth command to the Tag that receives the third command. Alternatively, the Reader may simultaneously send the carrier signal CW to the Tag that receives the third command. The fourth command includes but is not limited to a modulation manner. The modulation manner may alternatively be carried in the ACK, and the frequency offset indication information carried in the ACK may alternatively be carried by the fourth command in this step.

Step 1205: K Tags transmit data to the Reader.

In the embodiments shown in FIG. 9 to FIG. 12, the first device may directly send the frequency offset indication information to the second device, or may send the frequency offset indication information to the second device through an auxiliary device such as a third device, where a quantity of third devices may be one or more. The first device may directly receive the data sent by the second device, or may receive, through the third device, the data sent by the second device. The first device sends at least one of the following to the second device through the third device: the second command, the third command, the fourth command, and the fifth command; and the first device sends at least one of the following to the second device through the third device: the first response information, the second response information, and the data.

In an optional embodiment, the first device may directly send the third command to the M second devices instead of sending the third command to the second devices in a case of receiving the first response information fed back by the second devices. In other words, the embodiments shown in FIG. 9 to FIG. 12 may not include steps 901 and 902, steps 1001 and 1002, steps 1101 and 1102, and steps 1201 and 1202. In some other optional embodiments, steps 901 and 902, steps 1001 and 1002, steps 1101 and 1102, and steps 1201 and 1202 may alternatively be replaced by that the first device receives a sixth indication and/or a seventh indication sent by the M second devices.

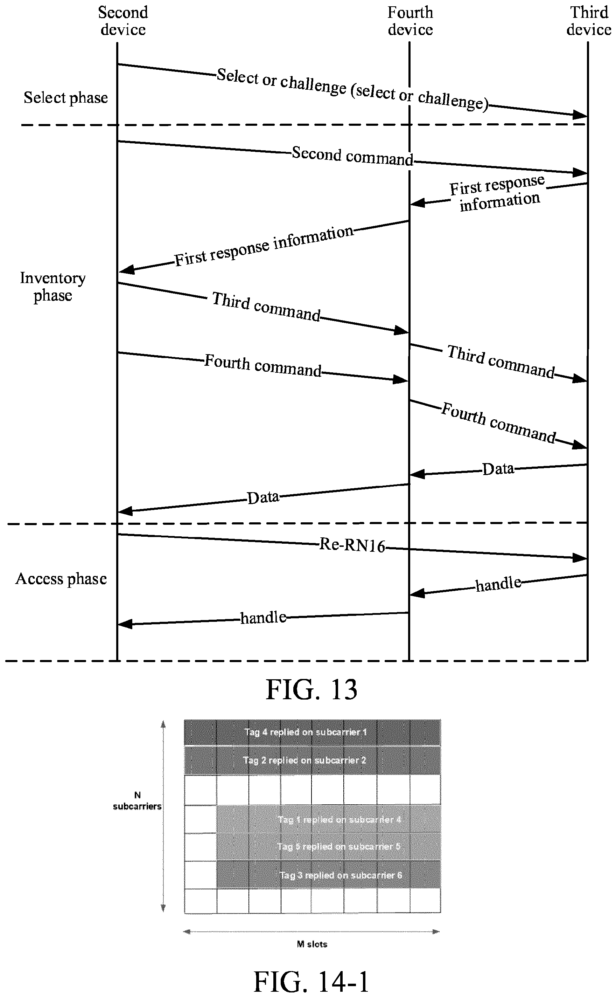

FIG. 13 is a schematic diagram of an information transmission process assisted by a third device in an embodiment of this application. As shown in FIG. 13, the third device receives first response information sent by a second device, and sends the first response information to a first device. Then, the third device sends a third command and a fourth command that are sent by the first device to the second device in sequence. Finally, the third device sends data sent by the second device to the first device. With reference to FIG. 9 to FIG. 12, the third device may assist the first device and the second device in information transmission in different manners. To avoid repetition, details are not described herein again in this application.

In an optional embodiment, in a case that the second device is a passive device, the carrier signal may be provided by the first device or the third device. In a case that the second device is an active device, the carrier signal may be provided by any one of the first device, the second device, and the third device.

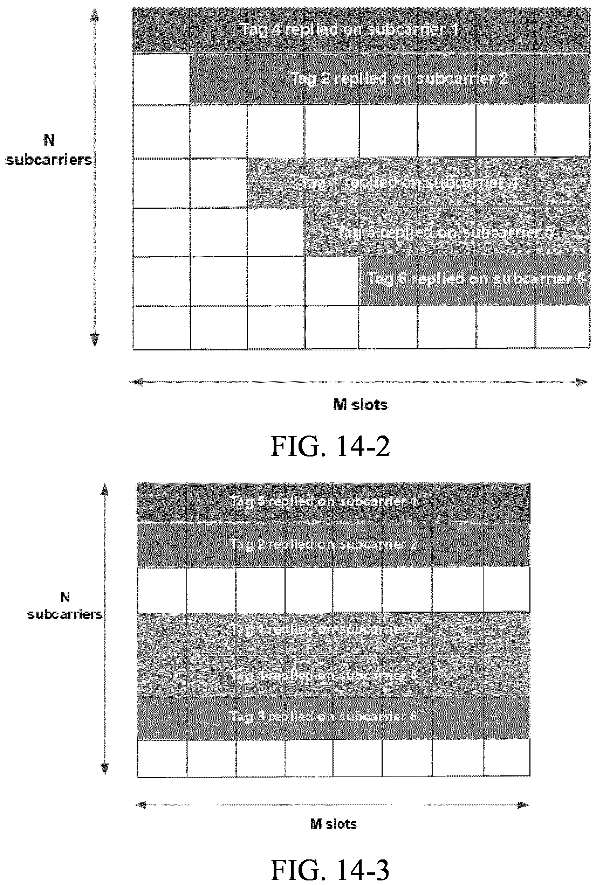

FIG. 14-1, FIG. 14-2, and FIG. 14-3 schematically show channel allocation situations after the second device performs frequency offset control according to the information transmission method.

When sending the RN16 to the first device, the M second devices randomly select an available channel within an operating bandwidth of the M second devices to send the RN16. It is assumed that subcarriers 1, 2, 4, 5, and 6 are available resources, and Tags 1 to 5 randomly send the RN16 and a pilot sequence carrying a channel parameter on the subcarrier 1/2/4/5/6. After receiving the RN16 and the pilot sequence, the first device obtains ID information of the Tag and corresponding channel state information. The first device indicates proper frequency offset indication information to the Tags 1 to 5 based on the obtained information and the frequency modulation capability of hardware of the second device. If the first device can process commands of only a few Tags and send frequency offset indication information to the few Tags, a result after the Tags receive the frequency offset indication information and complete a frequency offset is shown in FIG. 14-1. If the first device can process a command of only one Tag and send frequency offset indication information to one Tag, a result after the Tag receives the frequency offset indication information and completes a frequency offset is shown in FIG. 14-2. If the first device can process commands of M Tags and send indication information to the M Tags, a result after the Tags receive frequency offset indication information and complete a frequency offset is shown in FIG. 14-3.

The manners in FIG. 14-1 and FIG. 14-2 are access manners in a combination of frequency division and time division, while the manner in FIG. 14-3 is mainly a frequency division manner. A specific manner of accessing a plurality of Tags mainly depends on a processing capability of the first device.

The information transmission method in the embodiments of this application may be applicable to a related mode such as a cellular network/Wi-Fi mode/Bluetooth. In a Bluetooth operating mode, a service channel for conventional backscatter transmission is allocated and fixed by a network side. If allocation of a broadcast channel/data channel and the service channel is considered with reference to the capability of the BSC device, in this embodiment, the first device needs to repeatedly transmit the frequency offset indication information to the second device. The frequency offset indication information includes first frequency offset indication information and second frequency offset indication information, where the first frequency offset indication information is used for the second device to implement a frequency offset for allocation of a first channel, and the second frequency offset indication information is used for the second device to implement a frequency offset of a second channel. For example, in a Bluetooth mode, the first channel may be a broadcast channel, the second channel may be a service channel, the first frequency offset indication information is used for the second device to implement a frequency offset for allocation of the broadcast channel, and the second frequency offset indication information is used for the second device to implement a frequency offset of the service channel. The first device sends the first frequency offset indication information and the second frequency offset indication information to the second device simultaneously; or the first device sends the first frequency offset indication information and the second frequency offset indication information to the second device at different moments. In other words, in a case that the frequency offset indication information includes the first frequency offset indication information and the second frequency offset indication information, the first device may simultaneously send the first frequency offset indication information and the second frequency offset indication information to the second device, or may send the first frequency offset indication information and the second frequency offset indication information in sequence. When the first device sends the first frequency offset indication information and the second frequency offset indication information in sequence, the first device may first send the first frequency offset indication information to the second device, and the second device implements, based on the first frequency offset indication information, the frequency offset for the allocation of the first channel. Then, the first device sends the second frequency offset indication information to the second device after the second device completes allocation of the first channel. The first device may alternatively first send the first frequency offset indication information to the second device, and then send the second frequency offset indication information to the second device. In other words, the first device sends the second frequency offset indication information to the second device before the second device completes allocation of the first channel.

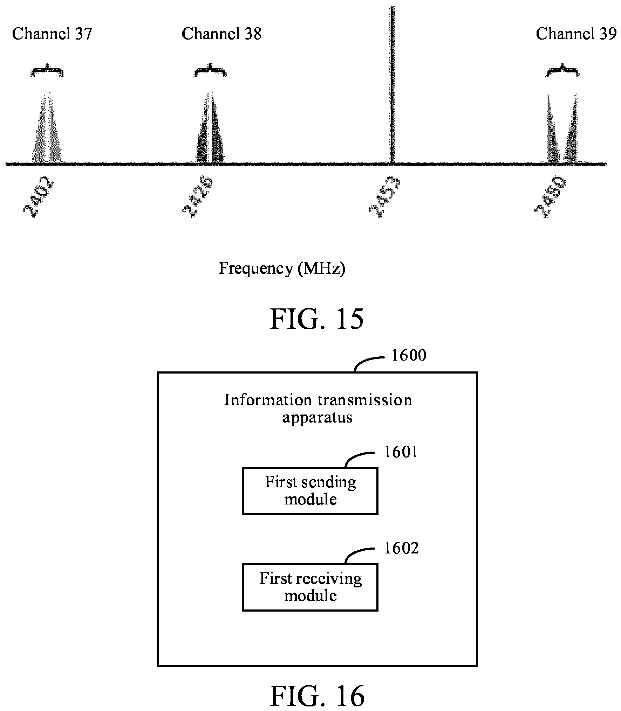

In a specific example, as shown in FIG. 15, after receiving the frequency offset indication information for allocation of the broadcast channel and a carrier signal CW that are sent by the first device, the second device modulates the carrier signal CW. A central frequency of the CW is 2453 MHz. After first modulation, two double sidebands (first harmonics) of 2426 MHz and 2480 MHz are generated, which are used as two broadcast channels (a channel 38 and a channel 39) in Bluetooth operation, and a third broadcast channel (a channel 37) corresponding to a second harmonic component is simultaneously generated.

After completing the allocation of the broadcast channel, the second device receives the frequency offset indication information and the carrier signal CW sent by the first device again, and modulates data between the broadcast channels 38 and 39 in an FSK modulation manner according to a maximum frequency offset indication/maximum modulation frequency/frequency offset indication information of an available frequency resource for modulation indicated by the first device.

FIG. 16 is a schematic structural diagram of an information transmission apparatus 1600 according to an embodiment of this application. As shown in FIG. 16, the information transmission apparatus 1600 includes:

a first sending module 1601, configured to send frequency offset indication information to a second device, where the frequency offset indication information is used for controlling a frequency offset generated during modulation of a carrier signal, and the frequency offset is an offset relative to a central frequency of the carrier signal; and

a first receiving module 1602, configured to receive data transmitted by the second device, where the data is transmitted through a backscatter signal sent by the second device, and the backscatter signal is a signal obtained after the second device modulates the carrier signal based on the frequency offset indication information.

The frequency offset indication information in this embodiment is the same as the frequency offset indication information in the embodiments shown in FIG. 6 to FIG. 13. To avoid repetition, details are not described again in this embodiment.

The information transmission apparatus 1600 in this embodiment of this application may be an electronic device, for example, an electronic device with an operating system, or may be a component in an electronic device, for example, an integrated circuit or a chip. The electronic device may be a terminal or another device, such as a server, other than a terminal. This is not specifically limited in the embodiments of this application.

In an optional embodiment, the first receiving module 1602 is further configured to receive the frequency offset indication information.

In an optional embodiment, the first sending module 1601 is further configured to: directly send the frequency offset indication information to the second device; or send the frequency offset indication information to the second device through a third device; and
the first receiving module 1602 is further configured to: directly receive data transmitted by the second device; or receive, through the third device, data transmitted by the second device.

In an optional embodiment, the frequency offset indication information includes first frequency offset indication information and second frequency offset indication information, where the first frequency offset indication information is used for the second device to implement a frequency offset for allocation of a first channel, and the second frequency offset indication information is used for the second device to implement a frequency offset of a second channel; and
the first sending module 1601 is further configured to: simultaneously send the first frequency offset indication information and the second frequency offset indication information to the second device; or send the first frequency offset indication information and the second frequency offset indication information to the second device at different moments.

In an optional embodiment, the first sending module 1601 is further configured to: send the first frequency offset indication information to the second device, and send the second frequency offset indication information to the second device before or after the second device completes allocation of the first channel.

In an optional embodiment, the first sending module 1601 is further configured to: actively send the frequency offset indication information to the second device; send the frequency offset indication information to the second device in response to a sixth indication reported by the second device, where the sixth indication is used for indicating that the second device has a frequency offset control requirement.

In an optional embodiment, the first sending module 1601 is further configured to: directly send the frequency offset indication information to the second device; or send a first command to the second device, where the first command includes the frequency offset indication information.

In an optional embodiment, the first sending module 1601 is further configured to: send a second command to the second device; and

the first receiving module 1602 is further configured to: receive first response information fed back by the second device for the second command, where the first response information includes at least one of the following: a signal receiving bandwidth of the second device, a frequency modulation capability of hardware of the second device, and a quantity of impedances of the second device; or receive a seventh indication reported by the second device, where the seventh indication includes at least one of the following: the signal receiving bandwidth of the second device, the frequency modulation capability of the hardware of the second device, and the quantity of impedances of the second device.

In an optional embodiment, the first command may be further used for indicating the second device to transmit data to the first device.

In an optional embodiment, the first command includes a third command and a fourth command; and

the first sending module 1601 is further configured to: send the third command to the second device, where the third command includes the frequency offset indication information; and send the fourth command to the second device, where the fourth command is used for indicating the second device to transmit data to the first device.

In an optional embodiment, a quantity of second devices is one or M, where M is an integer greater or equal to 2;

in a case that the quantity of second devices is M, the first sending module 1601 is further configured to: simultaneously send the second command to the M second devices; and simultaneously send the third command to the M second devices in a case of simultaneously receiving M pieces of first response information; or in a case of simultaneously receiving N pieces of first response information, only after M pieces of first response information are received, simultaneously send the third command to the M second devices, where 1≤N<M; or in a case of simultaneously receiving N pieces of first response information, directly send the third command to N second devices that feed back the first response information; and

the first receiving module 1602 is further configured to: receive the first response information fed back by the second device for the second command; and send the fourth command to the second device that receives the third command.

In an optional embodiment, the first sending module 1601 is further configured to: send an eighth indication to the second device, where the eighth indication is used for indicating a muting pattern and a muting ratio; and

the first sending module 1601 is further configured to: simultaneously send the third command to the M second devices; and send, in a case of receiving second response information fed back by K second devices, the fourth command to the K second devices that feed back the second response information; or send, in a case of receiving second response information fed back by the M second devices, the fourth command to the M second devices.

The first receiving module 1602 is further configured to: receive second response information fed back by K second devices for the third command, where 1≤K<M, and (M-K) second devices are mute in the muting pattern.

In an optional embodiment, the first sending module 1601 is further configured to: send a fifth command to the K second devices that feed back the second response information, where the fifth command is used for indicating that the second device feeding back the second response information does not need to respond to the third command; and repeatedly send the third command and the fifth command until the first device receives the second response information fed back by the M second devices.

In an optional embodiment, the first sending module 1601 is further configured to: repeatedly send the third command and the fourth command until the first device receives the second response information fed back by the M second devices.

In an optional embodiment, the third command further includes the first response information and/or a modulation manner; and the fourth command further includes the modulation manner.

In an optional embodiment, the first sending module 1601 is further configured to: send the carrier signal to the second device, where the frequency offset indication information is carried on the carrier signal; or send the frequency offset indication information to the second device before sending the carrier signal to the second device.

In an optional embodiment, the carrier signal is a single-frequency signal or a wideband signal.

The information transmission apparatus according to this embodiment of this application can implement all processes implemented by the first device in the embodiments shown in FIG. 6 to FIG. 13, and the same beneficial effects are achieved. Details are not described herein again to avoid repetition.

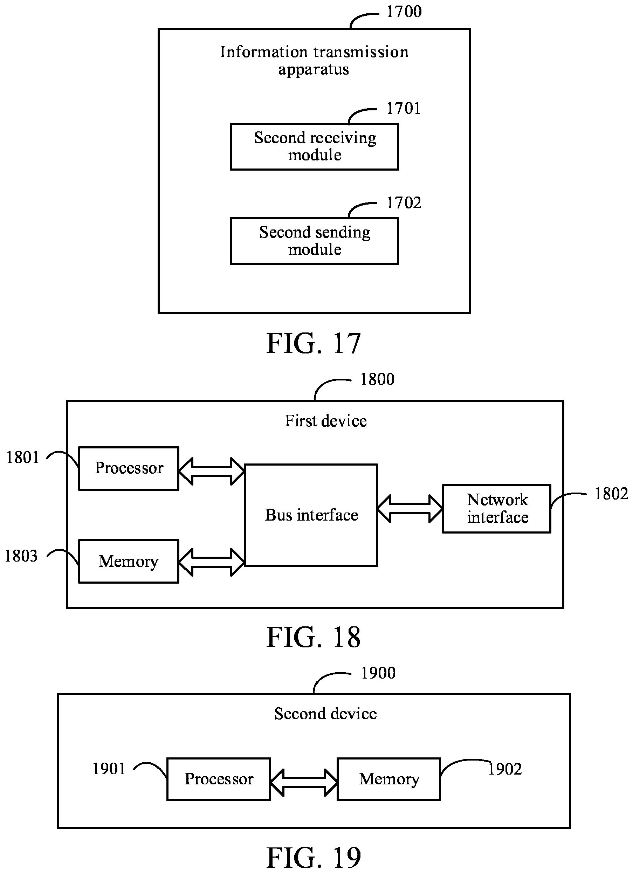

FIG. 17 is a schematic structural diagram of an information transmission apparatus 1700 according to another embodiment of this application. As shown in FIG. 17, the information transmission apparatus 1700 includes:

a second receiving module 1701, configured to receive frequency offset indication information sent by a first device, where the frequency offset indication information is used for the second device to control a frequency offset generated during modulation of a carrier signal, and the frequency offset is an offset relative to a central frequency of the carrier signal; and

a second sending module 1702, configured to transmit data to the first device, where the data is transmitted through a backscatter signal sent to the first device, and the backscatter signal is a signal obtained after the carrier signal is modulated based on the frequency offset indication information.

The frequency offset indication information in this embodiment is the same as the frequency offset indication information in the embodiments shown in FIG. 6 to FIG. 13. To avoid repetition, details are not described again in this application.

In an optional embodiment, the second receiving module 1701 is further configured to: directly receive the frequency offset indication information sent by the first device; or receive, through a third device, the frequency offset indication information sent by the first device; and

the second sending module 1702 is further configured to: directly transmit data to the first device; or transmit data to the first device through a third device.

In an optional embodiment, the frequency offset indication information includes first frequency offset indication information and second frequency offset indication information, where the first frequency offset indication information is used for the second device to implement a frequency offset for allocation of a first channel, and the second frequency offset indication information is used for the second device to implement a frequency offset of a second channel; and

the second receiving module 1701 is further configured to: simultaneously receive the first frequency offset indication information and the second frequency offset indication information sent by the first device; or receive the first frequency offset indication information and the second frequency offset indication information sent by the first device at different moments.

In an optional embodiment, the second receiving module 1701 is further configured to: receive a second command sent by the first device; and

the second sending module 1702 is further configured to: feed back first response information to the first device for the second command, where the first response information includes at least one of the following: a signal receiving bandwidth of the second device, a frequency modulation capability of hardware of the second device, and a quantity of impedances of the second device; or report a seventh indication to the first device, where the seventh indication includes at least one of the following: the signal receiving bandwidth of the second device, the frequency modulation capability of the hardware of the second device, and the quantity of impedances of the second device.

In an optional embodiment, the first command includes a third command and a fourth command; and

the second receiving module 1701 is further configured to: receive the third command sent by the first device, where the third command includes the frequency offset indication information; and receive the fourth command sent by the first device, where the fourth command is used for indicating the second device to transmit data to the first device.

In an optional embodiment, the second receiving module 1701 is further configured to: receive an eighth indication sent by the first device, where the eighth indication is used for indicating a muting pattern and a muting ratio;

the second sending module 1702 is further configured to: feed back second response information to the first device for the third command; and

the information transmission apparatus 1700 further includes a muting module, configured to be mute in the muting pattern.

In an optional embodiment, the second receiving module 1701 is further configured to: receive a fifth command sent by the first device, where the fifth command is used for indicating that the second device does not need to respond to the third command.

In an optional embodiment, the third command and/or the fourth command further includes a modulation manner; and

the information transmission apparatus 1700 further includes: a modulation module, configured to modulate the carrier signal in the modulation manner.

In an optional embodiment, the second receiving module 1701 is further configured to: receive the carrier signal sent by the first device, where the frequency offset indication information is carried on the carrier signal.

The information transmission apparatus according to this embodiment of this application can implement all processes implemented by the second device in the embodiments shown in FIG. 6 to FIG. 13, and the same beneficial effects are achieved. Details are not described herein again to avoid repetition.

An embodiment of this application further provides a first device. As shown in FIG. 18, a first device 1800 includes: a processor 1801, a network interface 1802, and a memory 1803. The network interface 1802 is, for example, a common public radio interface (common public radio Interface, CPRI).

Specifically, the first device 1800 of this embodiment of this application further includes: instructions or a program stored in the memory 1803 and runnable on the processor 1801, and the processor 1801 invokes the instructions or the program in the memory 1803 to perform the method implemented by each device in the embodiments shown in FIG. 5 to FIG. 11, and the same technical effects are achieved. Therefore, details are not described herein again to avoid repetition.

FIG. 19 is a schematic structural diagram of a second device 1900 according to an embodiment of this application. As shown in FIG. 19, the second device 1900 includes a processor 1901 and a memory 1902, where the memory stores a program or instructions runnable on the processor, and when the program or the instructions are executed by the processor, the method implemented by the second device is implemented, and the same technical effects are achieved. Details are not described again herein to avoid repetition.

An embodiment of this application further provides a communication system, including a first device and a second device, where the first device and the second device can perform each process of the information transmission method embodiments described in the foregoing embodiments, and the same technical effects can be achieved. Details are not described herein again to avoid repetition.

An embodiment of this application further provides a chip, including a processor and a communication interface, where the communication interface is coupled to the processor, and the processor is configured to run a program or instructions, to implement each process in the embodiments shown in FIG. 6 to FIG. 13.

An embodiment of this application further provides a readable storage medium, storing a program or instructions, where when the program or instructions are executed by a processor, each process of the foregoing information transmission method embodiments is implemented and the same technical effects can be achieved. Details are not described herein again to avoid repetition.

The readable storage medium may be a non-volatile/non-transitory readable storage medium, for example, may include a computer-readable storage medium such as a computer read-only memory ROM, a random access memory RAM, a magnetic disk, or an optical disk.

An embodiment of this application additionally provides a computer program/program product, where the computer program/program product is stored in a storage medium, and the computer program/program product is executed by at least one processor to implement each process of the foregoing information transmission method embodiments, and the same technical effects can be achieved. Details are not described herein again to avoid repetition.

The processor in each embodiment may be a processor of the foregoing first device or second device in the foregoing embodiments. When the foregoing computer program/program product/readable storage medium is executed by the corresponding processor of the first device or the second device, each process of the foregoing information transmission method embodiments corresponding to the first device or the second device may be implemented.

It is to be noted that, the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the process, method, object, or apparatus. In addition, it is to be noted that, the scope of the method and apparatus in the embodiments of this application is not limited to performing the functions in the order shown or discussed, and may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Through the description of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disk) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art can make many forms without departing from the scope of this application and the protection of the claims, all of which fall within the protection of this application.

**Claims**

1. An information transmission method, comprising:

   sending, by a first device, frequency offset indication information to a second device, wherein the frequency offset indication information is used for controlling a frequency offset generated during modulation of a carrier signal, and the frequency offset is an offset relative to a central frequency of the carrier signal; and
   receiving, by the first device, data transmitted by the second device, wherein the data is transmitted through a backscatter signal sent by the second device to the first device, and the backscatter signal is a signal obtained after the carrier signal is modulated based on the frequency offset indication information.

2. The method according to claim 1, wherein before the sending, by a first device, frequency offset indication information to a second device, the method further comprises:
   receiving, by the first device, the frequency offset indication information.

3. The method according to claim 1 or 2, wherein the sending, by a first device, frequency offset indication information to a second device comprises:

   directly sending, by the first device, the frequency offset indication information to the second device;
   or
   sending, by the first device, the frequency offset indication information to the second device through a third device; and
   the receiving, by the first device, data transmitted by the second device comprises:

   directly receiving, by the first device, the data transmitted by the second device;
   or
   receiving, by the first device through the third device, the data transmitted by the second device.

4. The method according to any one of claims 1 to 3, wherein the frequency offset indication information comprises at least one of the following:

   a first indication, wherein the first indication is used for indicating a maximum frequency offset of the second device;
   a second indication, wherein the second indication is used for indicating a maximum modulation frequency of the second device; and
   a third indication, wherein the third indication is used for indicating an available frequency resource of the second device.

5. The method according to claim 4, wherein the frequency offset indication information further comprises a fourth indication or a fifth indication, wherein the fourth indication is used for indicating that the second device implements frequency shifting based on at least one of the first indication, the second indication, and the third indication, and the fifth indication is used for indicating that the second device implements frequency hopping by using the third indication and at least one of the first indication and the second indication.

6. The method according to claim 4 or 5, wherein the first device determines the frequency offset indication information based on at least one of the following:

   the central frequency of the carrier signal and a signal bandwidth of the carrier signal;
   a signal receiving bandwidth of the second device;
   a frequency modulation capability of hardware of the second device; and
   a quantity of impedances of the second device.

7. The method according to claim 6, wherein the frequency modulation capability of hardware of the second device comprises at least one of the following:

   a switching frequency of a switch of the second device; and
   a frequency modulation capability of a varicap diode of the second device.

8. The method according to any one of claims 1 to 7, wherein the frequency offset indication information comprises first frequency offset indication information and second frequency offset indication information, wherein the first frequency offset indication information is used for the second device to implement a frequency offset for allocation of a first channel, and the second frequency offset indication information is used for the second device to implement a frequency offset of a second channel; and
the sending, by a first device, frequency offset indication information to a second device comprises:

sending, by the first device, the first frequency offset indication information and the second frequency offset indication information to the second device simultaneously;
or
sending, by the first device, the first frequency offset indication information and the second frequency offset indication information to the second device at different moments.

9. The method according to claim 8, wherein the sending, by the first device, the first frequency offset indication information and the second frequency offset indication information to the second device at different moments comprises:
sending, by the first device, the first frequency offset indication information to the second device, and sending the second frequency offset indication information to the second device before or after the second device completes allocation of the first channel.

10. The method according to any one of claims 1 to 9, wherein the sending, by a first device, frequency offset indication information to a second device comprises:

actively sending, by the first device, the frequency offset indication information to the second device;
or
sending, by the first device, the frequency offset indication information to the second device in response to a sixth indication reported by the second device, wherein the sixth indication is used for indicating that the second device has a frequency offset control requirement.

11. The method according to any one of claims 1 to 10, wherein the sending, by a first device, frequency offset indication information to a second device comprises:

directly sending, by the first device, the frequency offset indication information to the second device;
or
sending, by the first device, a first command to the second device, wherein the first command comprises the frequency offset indication information.

12. The method according to claim 11, wherein before the sending, by the first device, a first command to the second device, the method further comprises:

sending, by the first device, a second command to the second device; and
receiving, by the first device, first response information fed back by the second device for the second command, wherein the first response information comprises at least one of the following: a signal receiving bandwidth of the second device, a frequency modulation capability of hardware of the second device, and a quantity of impedances of the second device;
or
receiving, by the first device, a seventh indication reported by the second device, wherein the seventh indication comprises at least one of the following: the signal receiving bandwidth of the second device, the frequency modulation capability of the hardware of the second device, and the quantity of impedances of the second device.

13. The method according to claim 12, wherein the first command is further used for indicating the second device to transmit data to the first device.

14. The method according to claim 13, wherein the first command comprises a third command and a fourth command; and
the sending, by the first device, a first command to the second device comprises:

sending, by the first device, the third command to the second device, wherein the third command comprises the frequency offset indication information; and

sending, by the first device, the fourth command to the second device, wherein the fourth command is used for indicating the second device to transmit data to the first device.

15. The method according to claim 14, wherein a quantity of the second devices is one or M, wherein M is an integer greater or equal to 2;

in a case that the quantity of the second devices is M, the first device simultaneously sends the second command to the M second devices; and

the first device receives the first response information fed back by the second device for the second command, wherein in a case that the first device simultaneously receives M pieces of first response information, the first device simultaneously sends the third command to the M second devices; or in a case that the first device simultaneously receives N pieces of first response information, only after M pieces of first response information are received, the first device simultaneously sends the third command to the M second devices, wherein $1 \leq N < M$;or in a case that the first device simultaneously receives N pieces of first response information, the first device directly sends the third command to N second devices that feed back the first response information; and

the first device sends the fourth command to the second device that receives the third command.

16. The method according to claim 14, wherein the method further comprises: sending, by the first device, an eighth indication to the second device before sending the frequency offset indication information to the second device, wherein the eighth indication is used for indicating a muting pattern and a muting ratio; and the sending, by the first device, a first command to the second device comprises:

simultaneously sending, by the first device, the third command to M second devices;

receiving, by the first device, second response information fed back by K second devices for the third command, wherein $1 \leq K < M$, and (M-K) second devices are mute in the muting pattern; and

sending, by the first device in a case of receiving the second response information fed back by the K second devices, the fourth command to the K second devices that feed back the second response information; or sending, by the first device in a case of receiving second response information fed back by the M second devices, the fourth command to the M second devices.

17. The method according to claim 16, wherein the first device sends a fifth command to the K second devices that feed back the second response information, wherein the fifth command is used for indicating that the second device feeding back the second response information does not need to respond to the third command; and

the first device repeatedly sends the third command and the fifth command until the first device receives the second response information fed back by the M second devices.

18. The method according to claim 16, wherein after the sending, by the first device, the fourth command to the K second devices that feed back the second response information, the method further comprises:

repeatedly sending, by the first device, the third command and the fourth command until the first device receives the second response information fed back by the M second devices.

19. The method according to any one of claims 1 to 18, wherein the third command further comprises the first response information and/or a modulation manner; and the fourth command further comprises the modulation manner.

20. The method according to claim 18, wherein the sending, by a first device, frequency offset indication information to a second device comprises:

sending, by the first device, the carrier signal to the second device, wherein the frequency offset indication information is carried on the carrier signal; or sending, by the first device, the frequency offset indication information to the second device before the first device sends the carrier signal to the second device.

21. The method according to any one of claims 1 to 20, wherein the carrier signal is a single-frequency signal or a wideband signal.

22. An information transmission apparatus, comprising:

a first sending module, configured to send frequency offset indication information to a second device, wherein the frequency offset indication information is used for controlling a frequency offset generated during modulation of a carrier signal, and the frequency offset is an offset relative to a central frequency of the carrier signal; and a first receiving module, configured to receive data transmitted by the second device, wherein the data is transmitted through a backscatter signal sent by the second device, and the backscatter signal is a signal obtained after the second device modulates the carrier signal based on the frequency offset indication information.

23. An information transmission method, comprising:

receiving, by a second device, frequency offset indication information sent by a first device, wherein the frequency offset indication information is used for controlling a frequency offset generated during modulation of a carrier signal, and the frequency offset is an offset relative to a central frequency of the carrier signal; and transmitting, by the second device, data to the first device, wherein the data is transmitted through a backscatter signal sent by the second device to the first device, and the backscatter signal is a signal obtained after the second device modulates the carrier signal based on the frequency offset indication information.

24. The method according to claim 23, wherein the receiving, by a second device, frequency offset indication information sent by a first device comprises:

directly receiving, by the second device, the frequency offset indication information sent by the first device; or
receiving, by the second device through a third device, the frequency offset indication information sent by the first device; and
the transmitting, by the second device, data to the first device comprises:

directly transmitting, by the second device, the data to the first device; or
transmitting, by the second device, the data to the first device through the third device.

25. The method according to claim 23 or 24, wherein the frequency offset indication information comprises at least one of the following parameters:

a first indication, wherein the first indication is used for indicating a maximum frequency offset of the second device;
a second indication, wherein the second indication is used for indicating a maximum modulation frequency of the second device; and
a third indication, wherein the third indication is used for indicating an available frequency resource of the second device.

26. The method according to claim 25, wherein the frequency offset indication information further comprises a fourth indication or a fifth indication, wherein the fourth indication is used for indicating that the second device implements frequency shifting based on at least one of the first indication, the second indication, and the third indication, and the fifth indication is used for indicating that the second device implements frequency hopping by using the third indication and at least one of the first indication and the second indication.

27. The method according to any one of claims 23 to 26, wherein the frequency offset indication information comprises first frequency offset indication information and second frequency offset indication information, wherein the first frequency offset indication information is used for the second device to implement a frequency offset for allocation of a first channel, and the second frequency offset indication information is used for the second device to implement a frequency offset of a second channel; and
the receiving, by a second device, frequency offset indication information sent by a first device comprises:

simultaneously receiving, by the second device, the first frequency offset indication information and the second frequency offset indication information sent by the first device; or
receiving, by the second device, the first frequency offset indication information and the second frequency offset indication information sent by the first device at different moments.

28. The method according to any one of claims 23 to 27, wherein the receiving, by a second device, frequency offset indication information sent by a first device comprises:

receiving, by the second device, the frequency offset indication information actively sent by the first device; or

reporting, by the second device, a sixth indication to the first device, wherein the sixth indication is used for indicating that the second device has a frequency offset control requirement; and receiving, by the second device, the frequency offset indication information sent by the first device in response to the sixth indication.

29. The method according to any one of claims 23 to 28, wherein the receiving, by a second device, frequency offset indication information sent by a first device comprises:

directly receiving, by the second device, the frequency offset indication information sent by the first device; or

receiving, by the second device, a first command sent by the first device, wherein the first command comprises the frequency offset indication information.

30. The method according to claim 29, wherein before the receiving, by the second device, a first command sent by the first device, the method further comprises:

receiving, by the second device, a second command sent by the first device; and

feeding back, by the second device, first response information to the first device for the second command, wherein the first response information comprises at least one of the following: a signal receiving bandwidth of the second device, a frequency modulation capability of hardware of the second device, and a quantity of impedances of the second device; or

reporting, by the second device, a seventh indication to the first device, wherein the seventh indication comprises at least one of the following: a signal receiving bandwidth of the second device, a frequency modulation capability of hardware of the second device, and a quantity of impedances of the second device.

31. The method according to claim 30, wherein the first command is further used for indicating the second device to transmit data to the first device.

32. The method according to claim 31, wherein the first command comprises a third command and a fourth command; and the receiving, by the second device, a first command sent by the first device comprises:

receiving, by the second device, the third command sent by the first device, wherein the third command comprises the frequency offset indication information; and

receiving, by the second device, the fourth command sent by the first device, wherein the fourth command is used for indicating the second device to transmit data to the first device.

33. The method according to claim 32, wherein the method further comprises:

receiving, by the second device, an eighth indication sent by the first device, wherein the eighth indication is used for indicating a muting pattern and a muting ratio; and

after receiving the third command sent by the first device, remaining mute, by the second device, in the muting pattern or feeding back second response information to the first device for the third command.

34. The method according to claim 33, wherein in a case that the second device feeds back the second response information to the first device for the third command, the method further comprises:

receiving, by the second device, a fifth command sent by the first device, wherein the fifth command is used for indicating that the second device does not need to respond to the third command.

35. The method according to any one of claims 32 to 34, wherein the third command and/or the fourth command further comprises a modulation manner; and

the method further comprises: modulating, by the second device, the carrier signal in the modulation manner.

36. The method according to any one of claims 24 to 35, wherein in a case that the second device is a passive device, the carrier signal is provided by the first device or the third device; or

in a case that the second device is an active device, the carrier signal is provided by the first device, the second device, or the third device.

37. The method according to claim 36, wherein the receiving, by a second device, frequency offset indication information sent by a first device comprises:

receiving, by the second device, the carrier signal sent by the first device, wherein the frequency offset indication information is carried on the carrier signal;
or
receiving, by the second device, the frequency offset indication information before receiving the carrier signal.

38. The method according to any one of claims 23 to 37, wherein the carrier signal is a single-frequency signal or a wideband signal.

39. An information transmission apparatus, comprising:

a second receiving module, configured to receive frequency offset indication information sent by a first device, wherein the frequency offset indication information is used for controlling a frequency offset generated during modulation of a carrier signal, and the frequency offset is an offset relative to a central frequency of the carrier signal; and
a second sending module, configured to transmit data to the first device, wherein the data is transmitted through a backscatter signal sent to the first device, and the backscatter signal is a signal obtained after the carrier signal is modulated based on the frequency offset indication information.

40. A first device, comprising a processor and a memory, wherein the memory stores a program or instructions executable on the processor, and when the program or the instructions are executed by the processor, the steps of the information transmission method according to any one of claims 1 to 21 are implemented.

41. A second device, comprising a processor and a memory, wherein the memory stores a program or instructions executable on the processor, and when the program or the instructions are executed by the processor, the steps of the information transmission method according to any one of claims 23 to 38 are implemented.

42. A readable storage medium, wherein the readable storage medium stores a program or instructions, and when the program or the instructions are executed by a processor, the steps of the information transmission method according to any one of claims 1 to 21 are implemented, or the steps of the information transmission method according to any one of claims 23 to 38 are implemented.

BSC Receiver

RF radio frequency

Downlink

Uplink

BSC device

## FIG. 1

RF radio frequency

Downlink

Uplink

BSC Transmitter

BSC device

## FIG. 2

— ·· — ·· — Interference zone

— — — — — — — Non-interference zone

| |
|---|
| Channel 4 |
| |
| Channel 6 |
| |
| |
| Channel 9 |

## FIG. 3-1

— ·· — ·· — Interference zone

— — — — — — — Non-interference zone

| |
|---|
| Channel 1 |
| |
| Channel 2 |
| |
| Channel 3 |

## FIG. 3-2

FIG. 4

FIG. 5

— 601

A first device sends frequency offset indication information to a second device, where the frequency offset indication information is used for controlling a frequency offset generated during modulation of a carrier signal, and the frequency offset is an offset relative to a central frequency of the carrier signal

— 602

The first device receives data transmitted by the second device, where the data is transmitted through a backscatter signal sent by the second device to the first device, and the backscatter signal is a signal obtained after the second device modulates the carrier signal based on the frequency offset indication information

## FIG. 6

— 701

A first device sends a third command to a second device

— 702

The first device sends a fourth command to the second device

## FIG. 7

If EPC is valid, querying is repeatedly performed or another command is sent

Single Tag Reply

Interrogator | Select | CW | Query | CW | Ack | CW | QueryRep |

| NAK |

Tag          RN16        PC/XPC, EPC, PacketCRC    If EPC is invalid, an NAK instruction is sent

$T_4$   $T_1$   $T_2$   $T_1$   $T_2$

## FIG. 8

First device                                                    Second
                                                                device

Select phase

— Select or challenge (select or challenge) →

901: Second command →

← 902: First response information

Inventory phase

903: Third command →

904: Fourth command →

← 905: Data

Re-RN16 →

Access phase

← handle

Command →

FIG. 9

FIG. 10

First device                                                    Second
                                                                 device

Select phase

Select or challenge (select or challenge)

1101: Second command                                             M Tags

1102: First response information

Inventory phase

1103: Third command                                              K Tags

1104: Fourth command

1105: Data

Access phase

Re-RN16

handle

Command

FIG. 11

FIG. 12

FIG. 13

FIG. 14-1

FIG. 14-2

FIG. 14-3

Channel 37              Channel 38                                 Channel 39

2402              2426                    2453                 2480

Frequency (MHz)

FIG. 15

1600

Information transmission
apparatus

1601

First sending
module

1602

First receiving
module

FIG. 16

1700

Information transmission
apparatus

1701

Second receiving
module

1702

Second sending
module

FIG. 17

1800

First device

1801 Processor

Bus interface

Network
interface

1802

1803 Memory

FIG. 18

1900

Second device

1901 Processor

Memory

1902

FIG. 19

## INTERNATIONAL SEARCH REPORT

| | International application No. |
|---|---|
| | **PCT/CN2023/098887** |

**A.     CLASSIFICATION OF SUBJECT MATTER**

H04L27/00(2006.01)i

According to International Patent Classification (IPC) or to both national classification and IPC

**B.     FIELDS SEARCHED**

Minimum documentation searched (classification system followed by classification symbols)

IPC:  H04L,H04B

Documentation searched other than minimum documentation to the extent that such documents are included in the fields searched

Electronic data base consulted during the international search (name of data base and, where practicable, search terms used)

3GPP, CNTXT, DWPI, ENTXTC, CNKI: 频率偏移, 频偏, 调制, 反向散射, 信号, 载波, 指示, BACKscatter, BSC, frequency, FSK, offset, shift, modulat+, signal?, carrier?, indicat+

**C.     DOCUMENTS CONSIDERED TO BE RELEVANT**

| Category* | Citation of document, with indication, where appropriate, of the relevant passages | Relevant to claim No. |
|---|---|---|
| Y | CN 113395224 A (CHINA ACADEMY OF INFORMATION AND COMMUNICATIONS TECHNOLOGY) 14 September 2021 (2021-09-14) <br> description, paragraphs [0039]-[0054] | 1-42 |
| Y | CN 110311763 A (VIVO COMMUNICATION TECHNOLOGY CO., LTD.) 08 October 2019 (2019-10-08) <br> description, paragraphs [0068]-[0078] | 1-42 |
| A | US 2020052734 A1 (UNIVERSITY OF WASHINGTON) 13 February 2020 (2020-02-13) <br> entire document | 1-42 |
| A | WO 2021031662 A1 (HUAWEI TECHNOLOGIES CO., LTD.) 25 February 2021 (2021-02-25) <br> entire document | 1-42 |
| A | CN 108496094 A (UNIVERSITY OF WASHINGTON) 04 September 2018 (2018-09-04) <br> entire document | 1-42 |

☐ Further documents are listed in the continuation of Box C.          ☑ See patent family annex.

| | |
|---|---|
| *     Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **10 July 2023** | **14 July 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/098887**

| Patent document cited in search report | | | Publication date (day/month/year) | Patent family member(s) | | | Publication date (day/month/year) |
|---|---|---|---|---|---|---|---|
| CN | 113395224 | A | 14 September 2021 | None | | | |
| CN | 110311763 | A | 08 October 2019 | None | | | |
| US | 2020052734 | A1 | 13 February 2020 | WO | 2018075653 | A1 | 26 April 2018 |
| | | | | EP | 3529902 | A1 | 28 August 2019 |
| WO | 2021031662 | A1 | 25 February 2021 | CN | 112399542 | A | 23 February 2021 |
| | | | | CN | 114828185 | A | 29 July 2022 |
| CN | 108496094 | A | 04 September 2018 | US | 2018375703 | A1 | 27 December 2018 |
| | | | | WO | 2017132400 | A1 | 03 August 2017 |
| | | | | EP | 3408681 | A1 | 05 December 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210641452